# EUROPEAN PATENT APPLICATION

(11) **EP 4 848 236 A1**
(43) Date of publication of application: **02.12.2026**
(21) Application number: 25744871.2
(22) Date of filing: 10.01.2025
(51) Int. Cl.: G06V 30/12

(54) **ELECTRONIC APPARATUS, CONTROL METHOD, PROGRAM, AND STORAGE MEDIUM FOR STORING PROGRAM**

(30) Priority: 24.01.2024 JP 2024008827
(71) Applicant: Canon Kabushiki Kaisha, Tokyo 146-8501 (JP)
(72) Inventor: MATSUYAMA, Yuki, Tokyo 146-8501 (JP)
(74) Representative: Canon Europe Limited
(86) International application number: PCT/JP2025/000643
(87) International publication number: WO 2025/158939

(57) **Abstract**

An electronic device includes: obtaining means for obtaining text in an image by performing character recognition processing; transmitting means for transmitting the text obtained through the character recognition processing as processing target text, and a processing instruction requesting processing of the text, to processing means; receiving means for receiving a processing result that is based on the processing instruction from the processing means; and output means for outputting a document as a result of the character recognition performed on the image, using text contained in the processing result received by the receiving means.

## Description

### TECHNICAL FIELD

The present invention relates to an electronic device capable of executing an automatic character recognition function, a method in the electronic device, a program, and a storage medium storing the program.

### BACKGROUND ART

Automatic character recognition systems that automatically recognize written characters in an image and convert them to text are known. However, there may be errors in the recognition of the automatic character recognition systems, and Japanese Patent Laid-Open No. 2019-145023 describes a system that detects erroneous or omitted characters using machine learning.

Meanwhile, generative artificial intelligence (generative AI) is known. Generative AI is one model of machine learning, and is AI that generates new data using learned data. For example, Chat Generative Pre-Trained Transformer (ChatGPT), which is generative AI for chat that can interact in a chat format, and the like are widely used. A plug-in that provides additional functionality to ChatGPT is Chat Optical Character Recognition (ChatOCR), which has an automatic character recognition system. When ChatOCR is used, an image file is transmitted directly to the plugin. By using ChatOCR, not only can text be extracted from PDF files and image files but questions can also be asked about the extracted text.

### CITATION LIST

### PATENT LITERATURE

PTL1: Japanese Patent Laid-Open No. 2019-145023

### SUMMARY OF INVENTION

### TECHNICAL PROBLEM

In a configuration that performs output using processing results received from an external device, if an image file is transmitted as-is, it is envisioned that the communication amount will increase and the communication speed will decrease. Therefore, such a configuration that performs output using processing results received from an external device is required to take measures to reduce the communication load.

The present invention provides a mechanism to reduce the communication load in a configuration that performs output using processing results received from an external device.

### SOLUTION TO PROBLEM

An electronic device according to the present invention is characterized by including: obtaining means for obtaining text in an image by performing character recognition processing; transmitting means for transmitting the text obtained through the character recognition processing as processing target text, and a processing instruction requesting processing of the text, to processing means; receiving means for receiving a processing result that is based on the processing instruction from the processing means; and output means for outputting a document as a result of the character recognition performed on the image, using text contained in the processing result received by the receiving means.

### ADVANTAGEOUS EFFECTS OF INVENTION

According to the present invention, it is possible to reduce the communication load in a configuration that performs output using processing results received from an external device.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a configuration of a text processing system.
FIG. 2 is a diagram illustrating a configuration of a PC.
FIG. 3 is a diagram illustrating a configuration of a printing apparatus.
FIG. 4 is a flowchart for explaining processing for outputting an execution result of an OCR function.
FIG. 5 is a diagram illustrating a flow of the processing of FIG. 4.
FIG. 6 is a diagram illustrating a query.
FIG. 7 is a diagram illustrating a confirmation screen.
FIG. 8 is a flowchart for explaining processing of step S406.
FIG. 9 is a diagram illustrating a notification screen.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

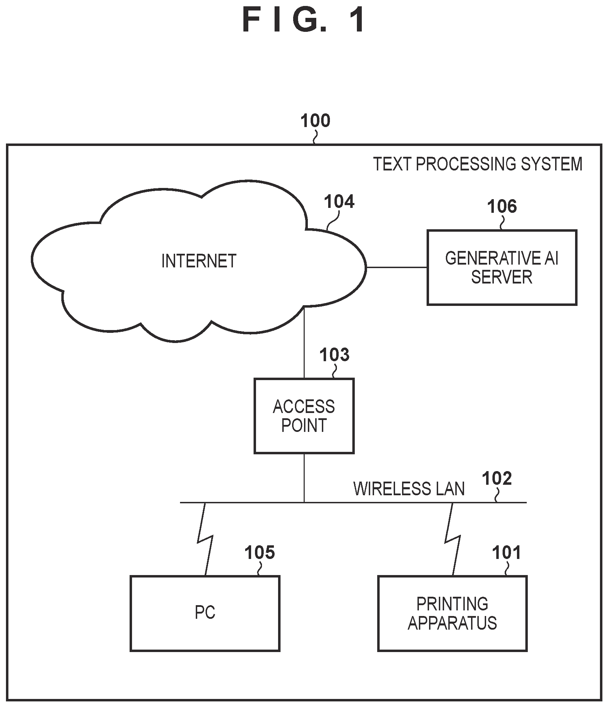

FIG. 1 is a diagram illustrating an example of a configuration of a text processing system according to the present embodiment. In a text processing system 100, a PC 105 and a printing apparatus 101 are connected so as to be capable of communicating with each other via a wireless LAN 102. Further, the PC 105 and the printing apparatus 101 can access the Internet 104 via an access point 103. With such a configuration, the PC 105 and the printing apparatus 101 can communicate with a generative AI server 106, which provides services of generative artificial intelligence (AI) and which is connected to the Internet 104. Generative AI refers to machine learning models constructed using deep learning, and generative AI services can output, for images, text, moving images, sound, and the like, results that are more creative than those of conventional services. As a generative AI service, ChatGPT, which uses a text-generating language model, for example, is known and realizes a conversational AI service that realizes human-like conversation. The generative AI server 106 need only be an external system that uses generative AI and may be a single server apparatus or may be in a form in which a plurality of server apparatuses are coordinated.

The PC 105 is an information processing apparatus that includes a communication function such as a wireless LAN and a wired LAN. A wireless LAN may be referred to as a WLAN. As the PC 105, a smart phone, a notebook PC, a tablet terminal, or a personal digital assistant (PDA), for example, is used. The PC 105 can communicate with the printing apparatus 101 via the wireless LAN 102. For example, the PC 105 can instruct the printing apparatus 101 to execute print and scan functions via the wireless LAN 102. In addition, the PC 105 and the printing apparatus 101 may be directly connected without going through the access point 103. That is, the PC 105 can communicate with the printing apparatus 101 through a direct connection. A wired network may be used as a network between the PC 105, the printing apparatus 101, and the access point 103 or as a part of that network.

The printing apparatus 101 is an example of a printing apparatus that includes a print function. The printing apparatus 101 may be configured as a multifunctional printer (MFP), which includes a read function (scanner), a FAX function, and a telephone function. In addition, the printing apparatus 101 includes a communication function capable of performing wireless communication with the PC 105. In the present embodiment, description will be given using the printing apparatus 101 as an example, but an apparatus in a form different from that of the printing apparatus 101 may be used. For example, a facsimile apparatus, a scanner apparatus, a projector, a portable terminal, a smart phone, a notebook PC, a tablet terminal, a PDA, a digital camera, a music reproduction device, a TV, a smart speaker, augmented reality (AR) glasses, or the like that includes a communication function may be used. The printing apparatus 101 receives print data including image data from the PC 105 connected via the access point 103, for example, and forms an image based on the data. Alternatively, the printing apparatus 101 transmits image data read by a scanner function, for example, to the PC 105 connected via the access point 103. Other control information and the like may also be communicated with a network connected via the access point 103.

The access point 103 is a communication apparatus that is provided separately from (externally to) the PC 105 and the printing apparatus 101 and operates as a WLAN base station apparatus. The access point 103 may be referred to as an external access point 103 or an external wireless base station. A communication apparatus that includes a WLAN communication function can communicate in WLAN infrastructure mode via the access point 103. In the present embodiment, the PC 105 and the printing apparatus 101 are examples of the communication apparatus.

The wireless infrastructure mode is, in other words, a mode for the printing apparatus 101 to communicate with the PC 105 via the access point 103 to which the printing apparatus 101 is connected, for example. The access point 103 communicates with an (authenticated) communication apparatus that has been permitted to connect to the access point 103 and relays wireless communication between that communication apparatus and another communication apparatus. Further, the access point 103 is connected to a wired LAN communication network and relays communication between a communication apparatus connected to that network and another communication apparatus wirelessly connected to the access point 103. Further, when an authentication method of a network configured by the access point 103 is a method in which an authentication server is used (when the access point 103 supports an authentication method in which an authentication server is used), the access point 103 authenticates a communication apparatus connected to the network in coordination with the authentication server (not illustrated) to perform access control thereof. The access point 103 may support an authentication method in which an authentication server is not used.

The PC 105 and the printing apparatus 101 can perform wireless communication in wireless infrastructure mode, which goes through the external access point 103, or in peer-to-peer mode, which does not go through the external access point 103, using the WLAN communication function that they each have. The peer-to-peer mode may be referred to as the "P2P mode", or the "wireless direct mode" relative to the wireless infrastructure mode. The P2P mode is, in other words, a mode for the printing apparatus 101 to directly communicate with the PC 105 without going through the access point 103. The P2P mode includes Wi-Fi Direct^{®} mode, software access point (software AP) mode, and the like. Wi-Fi Direct^{®} may be referred to as WFD. That is, the wireless direct mode can be said to be a communication mode that conforms to the IEEE 802.11 series.

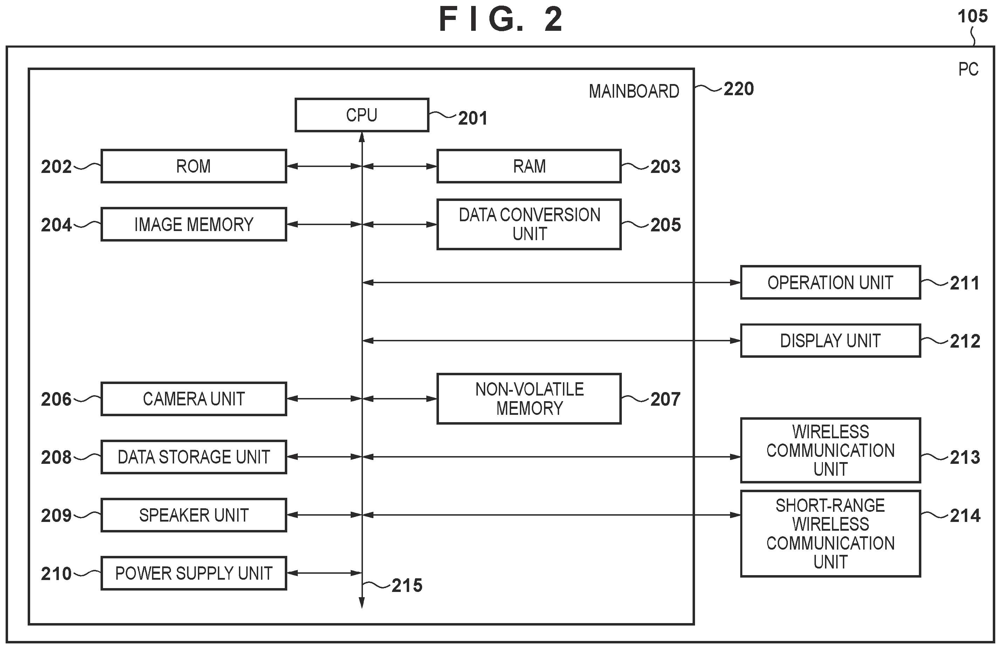

FIG. 2 is a diagram illustrating an example of a configuration of the PC 105. The PC 105 includes a mainboard 220 for controlling the entire apparatus, a wireless communication unit 213 for performing WLAN communication, a display unit 212, an operation unit 211, and a short-range wireless communication unit 214 for performing wireless communication different from that of the wireless communication unit 213. The mainboard 220 includes a CPU 201, a ROM 202, a RAM 203, an image memory 204, a data conversion unit 205, a camera unit 206, a non-volatile memory 207, a data storage unit 208, a speaker unit 209, and a power supply unit 210, for example. The respective functional units in the mainboard 220 are connected to each other via a system bus 215. Further, the mainboard 220 and the wireless communication unit 213, and the mainboard 220 and the short-range wireless communication unit 214, are respectively connected via a dedicated bus, for example. Further, the mainboard 220 and the display unit 212, and the mainboard 220 and the operation unit 211, are respectively connected via a dedicated bus, for example.

The CPU 201 is a system control unit and controls the entire PC 105. The operation of the PC 105 to be described in the present embodiment is realized, for example, by the CPU 201 reading out a program stored in the ROM 202 to the RAM 203 and executing the program. Dedicated hardware for each process may be provided. The ROM 202 stores control programs to be executed by the CPU 201, an embedded operating system (OS) program, and the like. By executing each control program stored in the ROM 202 under the control of the embedded OS stored in the ROM 202, the CPU 201 performs software control such as scheduling and task switching. The ROM 202 also stores an application (printing application) or the like that generates information that can be interpreted by the printing apparatus 101. The information that can be interpreted by the printing apparatus 101 is information corresponding to a function that can be executed by the printing apparatus 101, and the application can perform settings for printing, scanning, and the like for the printing apparatus 101 and instruct the printing apparatus 101 to execute each function. The RAM 203 is constituted by a static RAM (SRAM) or the like. The RAM 203 stores data (e.g., variables for program control), setting values registered by a user, management data of the PC 105, and the like. Further, the RAM 203 may be used as various work buffers. The image memory 204 is constituted by a memory such as a dynamic RAM (DRAM). The image memory 204 temporarily stores image data received via the wireless communication unit 213 and image data read from the data storage unit 208, for processing in the CPU 201. The non-volatile memory 207 is constituted by a memory, such as a flash memory, for example, and continues to store data even when the power of the PC 105 is turned off. The memory configuration of the PC 105 is not limited to the above configuration. For example, the image memory 204 and the RAM 203 may be shared, or data back up and the like may be performed using the data storage unit 208. Although a DRAM has been given as an example of the image memory 204, another storage medium such as a hard disk or a non-volatile memory may be used.

The data conversion unit 205 analyzes various formats of data and performs data conversion such as color conversion and image conversion. The camera unit 206 includes a function of electronically recording an image inputted through the lens and encoding the image. The image data obtained by imaging by the camera unit 206 is stored in the data storage unit 208. The speaker unit 209 performs control for realizing a function of inputting or outputting sound. The power supply unit 210 is a portable battery, for example, and performs control for supplying power to the apparatus. The display unit 212 electronically controls display content and executes control for performing, for example, display of operation and state statuses of the PC 105 and various kinds of input content. Upon accepting a user operation, the operation unit 211 generates an electric signal corresponding to that operation and executes control such as outputting the electric signal to the CPU 201.

The PC 105 performs wireless communication using the wireless communication unit 213 and performs data communication with another communication apparatus such as the printing apparatus 101. The wireless communication unit 213 converts data into packets and transmits the packets to another communication apparatus. Further, the wireless communication unit 213 reconstructs original data from packets from another, external communication apparatus and outputs the original data to the CPU 201. The wireless communication unit 213 is a unit for realizing communication conforming to standards such as WLAN. The short-range wireless communication unit 214 performs communication by a communication method different from that of the wireless communication unit 213, such as Bluetooth^{®}. The configurations of the PC 105 and the mainboard 220 are not limited to the above. For example, the individual functions of the mainboard 220 realized by the CPU 201 may be realized by a processing circuit such as an application-specific integrated circuit (ASIC) or by any of hardware and software.

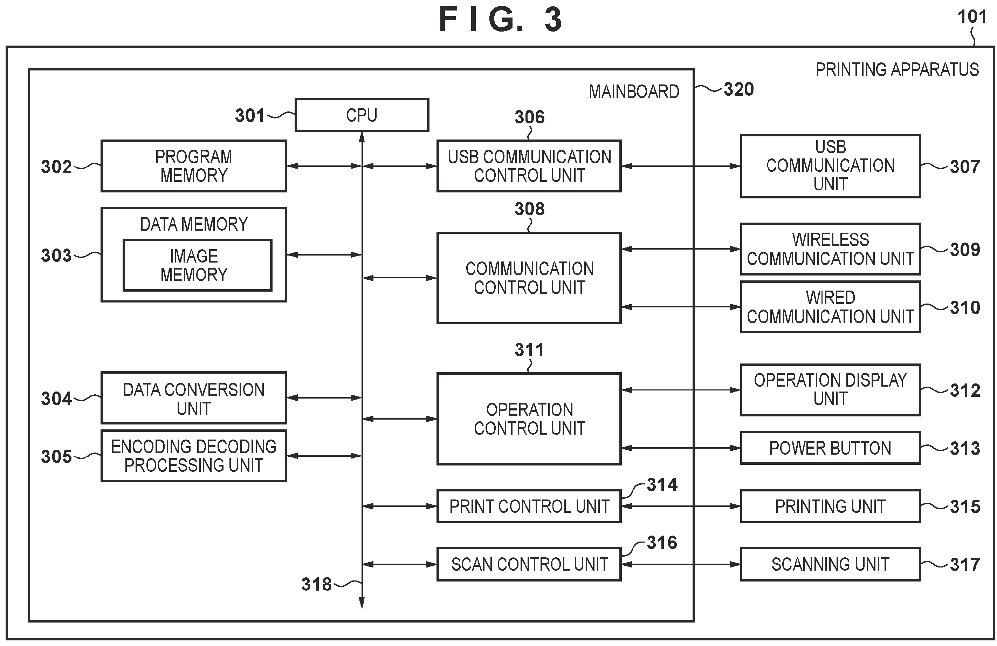

FIG. 3 is a block diagram illustrating an example of a configuration of the printing apparatus 101. The printing apparatus 101 includes a mainboard 320 for controlling the entire apparatus, a USB communication unit 307, a wireless communication unit 309, a wired communication unit 310, an operation display unit 312, a power button 313, a printing unit 315, and a scanning unit 317.

The mainboard 320 is provided with a CPU 301 in the form of a microprocessor. The CPU 301 controls the printing apparatus 101 according to a control program stored in a program memory 302 in the form of a ROM connected via an internal bus 318 and content stored in a data memory 303 in the form of a RAM. The operation of the printing apparatus 101 to be described in the present embodiment is realized, for example, by the CPU 301 reading out a program stored in the program memory 302 to the data memory 303 and executing the program. The CPU 301 controls a scan control unit 316 to cause the scanning unit 317 to optically read an original and stores the read data in an image memory in the data memory 303. The scan control unit 316 is an interface for connecting the scanning unit 317 and the mainboard 320, and performs, for example, conversion of a scanned image data format. For example, the CPU 301 controls a print control unit 314 to cause the printing unit 315 to print an image of the read data stored in the image memory in the data memory 303 on a printing medium (copy function). The print control unit 314 is an interface for connecting the printing unit 315 and the mainboard 320, and performs, for example, conversion of image data. A data conversion unit 304 analyzes various formats of data and performs data conversion such as color conversion and conversion from image data to print data. An encoding decoding processing unit 305 performs encoding and decoding processing and enlargement and reduction processing of image data (JPEG, PNG, etc.) handled by the printing apparatus 101.

The CPU 301 controls the USB communication unit 307 via a USB communication control unit 306 to perform USB communication with the external PC 105 by USB connection. The CPU 301 controls an operation control unit 311 to accept operation information from the power button 313 and the operation display unit 312. The CPU 301 controls the operation control unit 311 to display the state of the printing apparatus 101 or a function selection menu on the operation display unit 312, for example. The CPU 301 controls the wireless communication unit 309 and the wired communication unit 310 via a communication control unit 308 according to the operation information accepted by the operation display unit 312. For example, the CPU 301 changes settings for a communication method and performs settings for connecting to a network according to the operation information.

The wireless communication unit 309 is a unit capable of providing a WLAN communication function. That is, the wireless communication unit 309 converts data into packets and transmits the packets to another communication apparatus conforming to a WLAN standard. Further, the wireless communication unit 309 reconstructs original data from packets from another, external communication apparatus and outputs the original data to the CPU 301. The wireless communication unit 309 is configured to be capable of executing data (packet) communication in a WLAN system conforming to the IEEE 802.11 standard series (IEEE 802.11a/b/g/n/ac/ax, etc.), for example. However, the wireless communication unit 309 is not limited to this configuration and may be capable of executing communication of a WLAN system conforming to another standard. Further, the wireless communication unit 309 can perform communication in WFD mode, communication in P2P mode, communication in wireless infrastructure mode, and the like. The PC 105 and the printing apparatus 101 can perform wireless communication that is based on the WFD mode, and the wireless communication unit 309 includes a software AP function or a group owner function. That is, the wireless communication unit 309 can construct a communication network in P2P mode and determine channels to be used for communication in P2P mode.

The wired communication unit 310 is a unit for performing wired communication. The wired communication unit 310 is capable of data (packet) communication in a wired LAN (Ethernet) system conforming to the IEEE 802.3 series, for example. Further, in wired communication using the wired communication unit 310, communication in wired communication mode is possible. The wired communication unit 310 is connected to the mainboard 320 via a bus cable or the like.

The printing apparatus 101 includes an optical character recognition (OCR) function of recognizing character information in an image read by the scan function and extracting text data. The OCR function may be realized by the scan control unit 316, for example. With the OCR function, data in a file format in which text can be searched for is created. Such data is, for example, PDF, XML Paper Specification (XPS), or the like. The printing apparatus 101 can store (or transmit) a file generated by the OCR function to an internally or externally designated storage destination. Settings for and execution of such an OCR function may be instructed on an operation panel on the printing apparatus 101 or may be instructed to the printing apparatus 101 from an application installed on the PC 105. The printing apparatus 101 is not limited to the configuration illustrated in FIG. 3, and appropriately includes a configuration according to a function that can be implemented by a device applied as the printing apparatus 101.

Incidentally, there may be an error such as an erroneous character in a result of automatic character recognition processing by the OCR function. In the present embodiment, a configuration in which an error of a result of automatic character recognition processing by the OCR function is corrected by a generative AI service is assumed. For this purpose, for example, a configuration in which an image file generated by the OCR function is transmitted to the generative AI server 106, which provides a generative AI service, using ChatOCR, which is a plug-in of ChatGPT which provides a text-generating language model is conceivable. However, in such a configuration, when the OCR function is executed on a large number of image files, for example, it is expected to cause an increase in the amount of communication with the server or a decrease in the communication speed. Therefore, in the present embodiment, a configuration in which the communication load with the generative AI server 106 can be reduced will be described.

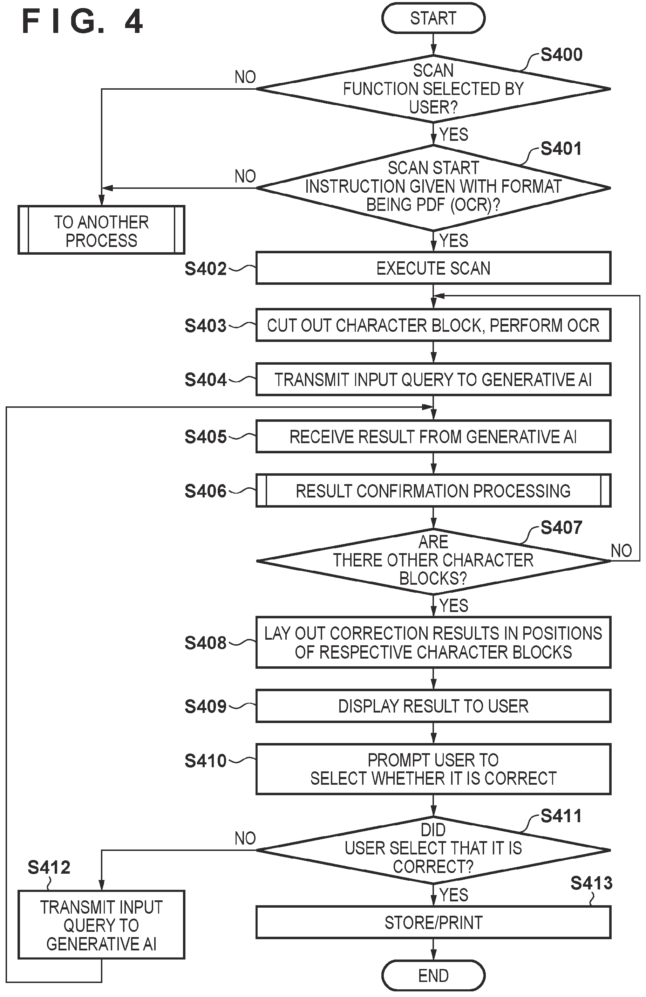

FIG. 4 is a flowchart for explaining processing for outputting an execution result of the OCR function, according to the present embodiment. The processing of FIG. 4 is realized, for example, by the CPU 301 reading out a program stored in the computer-readable program memory 302 into the data memory 303 and executing the program. The processing of the flowchart is started in a state in which the printing apparatus 101 is activated, a home screen is displayed on the operation display unit 312, and a desired function can be selected by the user. Menu buttons corresponding to the scan function, the copy function, and the like, for example, are displayed on the home screen so as to be selectable by the user.

In step S400, the CPU 301 determines a function for which selection has been accepted through the operation display unit 312. If the accepted function is the scan function, the processing proceeds to step S401, and if it is not the scan function, the processing of FIG. 4 is terminated, and processing corresponding to that function is performed. The description of that processing will be omitted. In the present embodiment, description will be given assuming that selection of the scan function has been accepted through the operation display unit 312.

In step S401, the CPU 301 determines whether or not a scan start instruction has been accepted in a state in which a file format after the scan is designated as "PDF (OCR)". That is, in step S401, it is determined whether or not to create a character-recognized PDF file. In other words, the determination processing of step S401 is processing for determining whether or not to execute a character recognition function and create an image file. If a scan start instruction is accepted in a state in which "PDF (OCR)" is designated, the processing proceeds to step S402. If a scan start instruction is accepted while another file format is designated, the processing of FIG. 4 is terminated, and processing corresponding to that function is performed. The description of that processing will be omitted.

In step S402, the CPU 301 controls the scanning unit 317 to execute scanning of an original placed on a document table (not illustrated) and obtain read data. The CPU 301 stores the read data in the data memory 303.

In step S403, the CPU 301 executes processing for cutting out a character block in the read data stored in the data memory 303. Here, the character block is a block in which characters are concentrated.

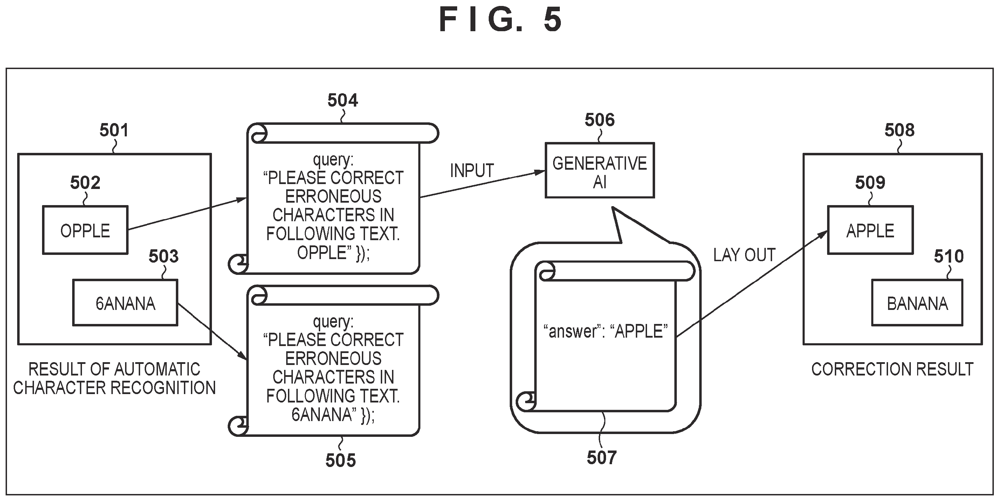

FIG. 5 is a diagram illustrating a flow of the processing of FIG. 4. Data 501 of FIG. 5 indicates an example of an execution result of the processing of step S403, and "opple" of a character block 502 and "6anana" of a character block 503 are examples of the above character block. The character blocks 502 and 503 correspond to regions obtained by performing division in an image represented by the data 501 and to be subjected to automatic character recognition processing. "opple" of the character block 502 indicates an example of an erroneous result, caused by automatic character recognition, of what was intended to be "apple". Further, "6anana" of the character block 503 indicates an example of an erroneous result, caused by automatic character recognition, of what was intended to be "banana". Character blocks are cut out by grouping. These cutout regions correspond to the above divided regions. Then, the CPU 301 executes the OCR function for each cutout character block and stores an execution result (processing target text) in the data memory 303. In step S403, a character block may be cut out after the OCR function is executed. The subsequent processing is performed focusing on one of the character blocks cut out in step S403.

In step S404, the CPU 301 creates, as a query for input to the generative AI, an input "Please correct erroneous characters in the following text" followed by the above automatic character recognition result, and transmits it to the generative AI server 106 using the wireless communication unit 309. A query is, in other words, an example of a processing instruction requesting processing in the generative AI server 106. The transmission to the generative AI server 106, in other words, can be said to be processing for controlling input to generative AI.

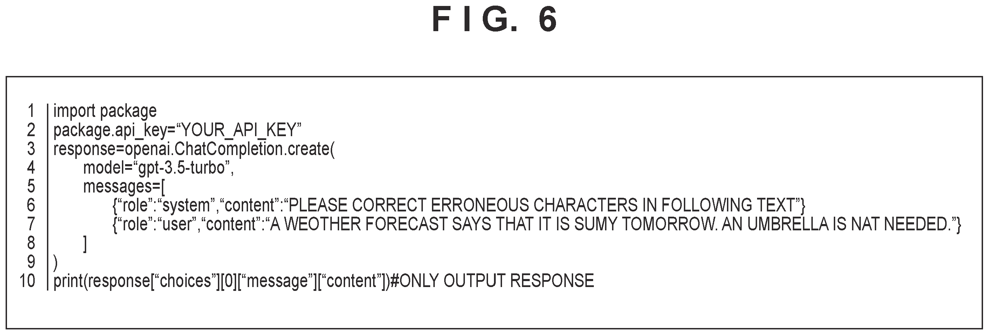

FIG. 6 is a diagram illustrating an example of a query created for each character block. The query created for each character block is described in development code for generative AI for which a library is published. FIG. 6 illustrates an example described in Python^{®}.

The first line of FIG. 6 indicates reading a package related to a generative AI tool such that it can be used. "package" is indicated in the figure, but a package name, such as open-source code, will be indicated.

The second line of FIG. 6 indicates input of a key code for an account obtained to use an API of the generative AI tool. The key code need only be a string of numbers and alphabetic characters, and "YOUR_API_KEY" in FIG. 6 is an example thereof.

In the third line of FIG. 6, a name of a variable for storing a return value of a create function in a ChatCompletion group is specified. The name is not fixed to "response", and may be anything in particular. By this, the API can be called in succession. For example, by naming them response1 and response2 in sequence, the API can be called in succession for cutout character blocks, as in queries 504 and 505 in FIG. 5.

The fourth to seventh lines of FIG. 6 correspond to the above query. The fourth line of FIG. 6 specifies the identifier of a trained model. The fifth line of FIG. 6 indicates content transmitted in the chat. The sixth line of FIG. 6 indicates that "system" is specified as a role. What function is to be executed can be specified in "content", and in this example, correction of erroneous characters in the text is specified. The seventh line of FIG. 6 indicates that "user" is specified as a role. The execution result of the OCR function is stored in content.

The seventh line of FIG. 6 indicates an example of text different from the example of FIG. 5. That is, in FIG. 6, although "A weather forecast says that it is sunny tomorrow. An umbrella is not needed." is intended, an example of an erroneous result caused by automatic character recognition "A weother forecast says that it is sumy tomorrow. An umbrella is nat needed." is indicated.

The eighth and ninth lines of FIG. 6 are closing brackets. The 10th line of FIG. 6 indicates that only the content of a message (i.e., a response to the query) in the information received from the generative AI is outputted. This content is used for displaying a correction result in preview or for reflecting it to a file (i.e., a PDF with character information) storing the execution result of the OCR function.

In step S405, the CPU 301 receives a correction result returned from the generative AI server 106 using the wireless communication unit 309 and stores the correction result in the data memory 303. A correction result 507 of FIG. 5 indicates an example of a correction result from the generative AI server 106 corresponding to generative AI 506. That is, it is indicated that "opple" has been corrected to "apple".

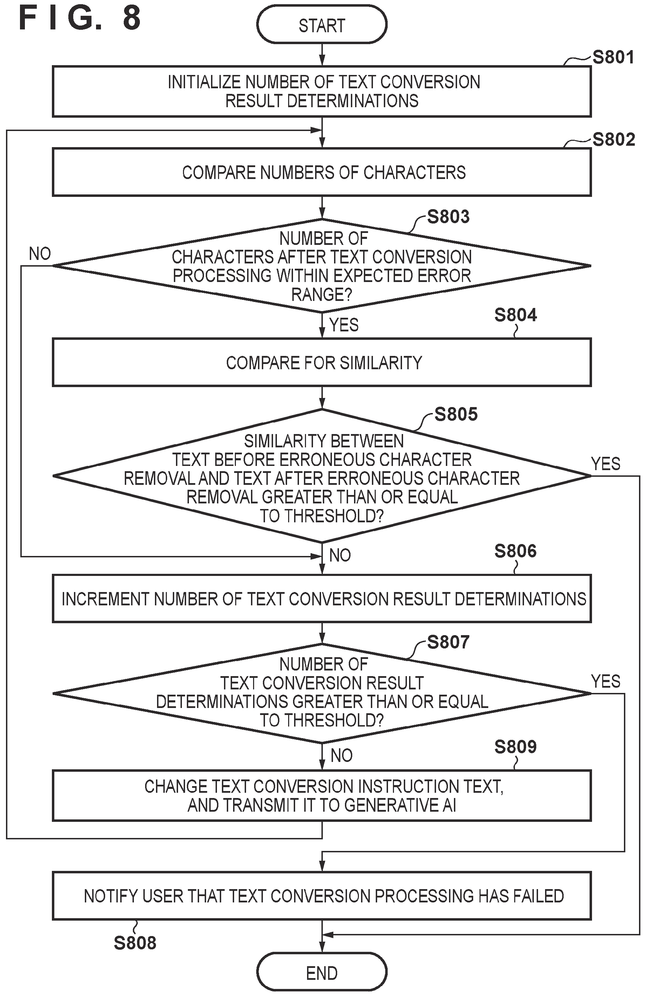

In step S406, the CPU 301 performs processing for confirming whether the correction result is as expected. The processing of step S406 will be described later in detail with reference to FIG. 8.

In step S407, the CPU 301 determines whether there are other character blocks cut out in step S403. If it is determined that there is another character block, the processing is repeated from step S403 focusing on that character block. If it is determined that there are no other character blocks, the processing proceeds to step S408.

In step S408, the CPU 301 lays out the correction results received in step S405 in the positions corresponding to the character blocks cut out in step S403.

Data 508 of FIG. 5 indicates an example in which correction results have been laid out in positions corresponding to the character blocks (uncorrected character blocks) corresponding to respective queries inputted to the generative AI 506. A character block 509 indicates a correction result "apple" received in step S405 by transmitting "opple" to the generative AI server 106 in step S404. Further, the character block 509 is arranged so as to correspond to the position of "opple" of the character block 502 read by scanning. A character block 510 indicates a correction result "banana" received in step S405 by transmitting "6anana" to the generative AI server 106 in step S404. Further, the character block 510 is arranged so as to correspond to the position of "6anana" of the character block 503 read by scanning.

In step S409, the CPU 301 displays a result of the layout in step S408 as a confirmation screen in the operation display unit 312.

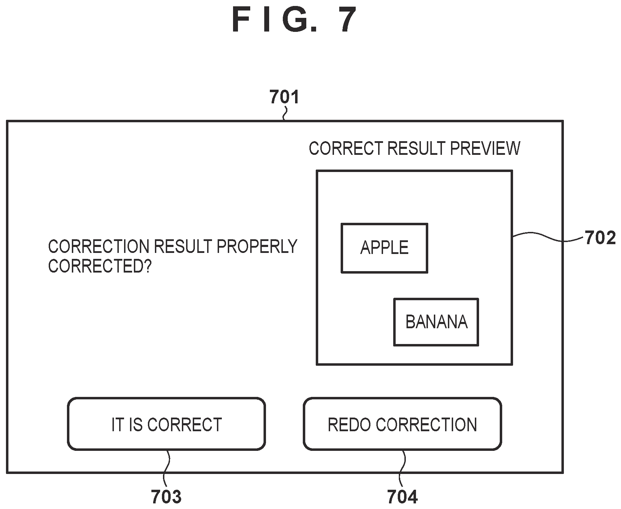

FIG. 7 is a diagram illustrating an example of the confirmation screen displayed in step S409. A confirmation screen 701 displays a correction result preview 702. The correction result preview 702 is created based on the data 508 of FIG. 5.

In the above, "opple" and "6anana" have been described as examples of a query, but it is similar even for other examples. For example, if "A weother forecast says that it is sumy tomorrow. An umbrella is nat needed." is inputted as a query in step S404, in step S405 "A weather forecast says that it is sunny tomorrow. An umbrella is not needed." is received as a correction result. In that case, the correction result "A weather forecast says that it is sunny tomorrow. An umbrella is not needed." is laid out so as to correspond to the position, on the original, of the character block "A weother forecast says that it is sumy tomorrow. An umbrella is nat needed." read by scanning.

The confirmation screen 701 is a screen for prompting the user to confirm the correction result of the generative AI server 106, and a button 703 for accepting user confirmation of the correction and a button 704 for accepting an instruction to redo the correction are displayed.

In step S410, the CPU 301 accepts a user operation on the confirmation screen 701 through the operation display unit 312. In step S411, the CPU 301 determines whether or not to redo the correction based on the accepted user operation. Specifically, for example, if a press of the button 704 is accepted, it is determined to redo the correction, and if a press of the button 703 is accepted, it is determined not to redo the correction. If it is determined to redo the correction, the processing proceeds to step S412, and if it is determined to not redo the correction, the processing proceeds to step S413.

In step S412, the CPU 301 creates, as a query for input to the generative AI, an input "Please correct erroneous characters in the following text" followed by the correction result received from the generative AI server 106 in step S405, and transmits it to the generative AI server 106 using the wireless communication unit 309. Then, the processing is repeated from step S405.

In step S413, the CPU 301 performs processing for outputting, as a document, a layout result displayed as the confirmation screen 701 in step S409. For example, the CPU 301 controls the printing unit 315 to execute print processing. Alternatively, the CPU 301 performs processing for transmitting it to the PC 105 using the wireless communication unit 309. Then, the processing of FIG. 4 is terminated.

Next, the correction result confirmation processing of step S406 will be described with reference to FIG. 8.

In step S801, the CPU 301 initializes the number of times processing for determining the result of correction by the generative AI server 106 is performed. Specifically, for example, the number of times is cleared to zero. A variable representing the number of times is allocated in advance in the data memory 303.

In step S802, the CPU 301 compares the numbers of characters of the character block before and after correction by the generative AI server 106. For example, the number of characters in the character block 502 in FIG. 5 is compared with the number of characters in the character block 509. In step S803, the CPU 301 determines whether or not a difference between the numbers of characters of the character block before and after correction by the generative AI server 106 is within an expected error range. Specifically, for example, the CPU 301 references the data memory 303 and determines whether or not the number of characters of the character block cut out in step S403 falls within a margin of 10% or less (i.e., falls within 90% to 110%) of the number of characters of the character block that is the correction result received from the generative AI server 106 in step S405. If it is determined to be within the expected error range, the processing proceeds to step S804, and if it is determined not to be within the expected error range, the processing proceeds to step S806.

In step S804, the CPU 301 compares the character strings of the character block before and after correction by the generative AI server 106 and obtains a similarity. Specifically, for example, the CPU 301 references the data memory 303 and calculates a similarity between the character string of the character block cut out in step S403 and the character string of the character block received from the generative AI server 106 in step S405, by Gestalt pattern matching.

In step S805, the CPU 301 determines whether the similarity obtained in step S804 is greater than or equal to a threshold. Specifically, for example, the CPU 301 determines whether or not the similarity calculated by Gestalt pattern matching is 0.8 or more. If it is determined to be greater than or equal to the threshold, the processing of FIG. 8 is terminated. If it is determined to be not greater than or equal to the threshold, that is, less than the threshold, the processing proceeds to step S806.

As described above, in the present embodiment, after the correction result is returned from the generative AI server 106 in step S405, processing for determining the result of correction by the generative AI server 106 is performed in steps S803 and S805. This, in other words, can be said to be processing for determining whether or not a result of processing in the generative AI server 106 is an expected result. That is, it can be said to be processing for determining whether or not erroneous character correction has been performed as expected in the generative AI server 106. In step S803, a difference between the numbers of characters is assumed as a determination condition, and in step S805, a similarity is assumed as a determination condition. The conditions for determining whether or not erroneous character correction has been performed as expected is not limited to these, and other conditions may be used. For example, the number of words, the number of subjects, and the like may be used as conditions.

In step S806, the CPU 301 increments the number of times the correction result determination processing is performed. In step S807, the CPU 301 determines whether the number of times the correction result determination processing is performed has reached a predetermined number of times (whether the correction result determination processing has been performed a predetermined number of times). Specifically, for example, the CPU 301 determines whether or not the number of times the correction result determination processing is performed has reached 10. If it is determined that it has reached the predetermined number of times, the processing proceeds to step S808, and if it is determined that it has not reached the predetermined number of times, that is, it is less than the predetermined number of times, the processing proceeds to step S809.

In step S808, the CPU 301 displays an error notification screen for notifying that the correction by the generative AI server 106 was not performed correctly, that is, that the erroneous character correction by the generative AI server 106 failed, in the operation display unit 312, and then, the processes of FIGS. 8 and 4 are terminated.

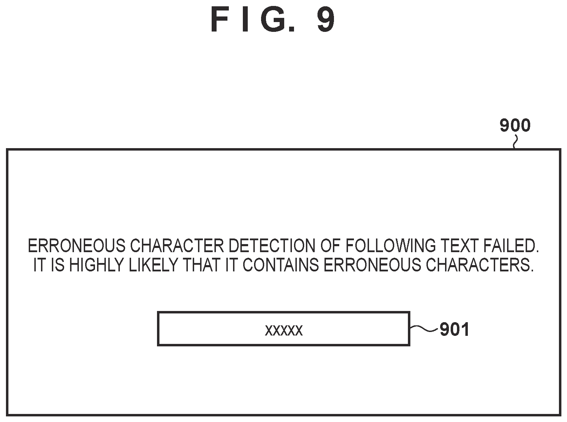

FIG. 9 is a diagram illustrating an example of an error notification screen displayed in step S808. An error notification screen 900 displays a message indicating that the correction by the generative AI server 106 was not performed properly. A region 901 displays the character block cut out in step S403 as text before correction.

In step S809, the CPU 301 creates "The current correction result is inadequate. Please perform the correction properly." as a query for input to the generative AI and transmits it to the generative AI server 106 using the wireless communication unit 309.

Then, the CPU 301 receives a correction result returned from the generative AI server 106 using the wireless communication unit 309, stores the correction result in the data memory 303, and repeats the processing from step S802. In the present embodiment, the query for input to the generative AI in step S809 is different from the query for input to the generative AI in step S404 or S412. That is, in step S809, processing for retransmitting a processing instruction to the generative AI server 106 is performed using a query (correction processing instruction) obtained by correcting the query used in step S404. By this, a result that is different from the correction result received in step S405 can be expected. Then, redetermination processing according to steps S803 and S805 in which that result is used is performed. The above retransmission processing is, in other words, processing for re-input to the generative AI server 106.

Effects to be achieved by performing the processing of FIG. 8 will be described. For example, it is assumed that text before erroneous character correction is an instruction including erroneous characters such as "Descri6e Halloween in 100 wonds." In that case, generative AI accepts the text before erroneous character correction as instruction text, and outputs, as a result of conversion processing other than erroneous character correction, text "Halloween is a traditional festival celebrated on October 31st every year. This festival is popular mainly in the United States and Canada, but has spread all over the world." to the user.

When the processing of FIG. 8 is executed on the above example, it is determined that the conversion processing result "Halloween is a traditional festival celebrated on October 31st every year. This festival is popular mainly in the United States and Canada, but has spread all over the world." has a difference in the number of characters from the text before erroneous character correction.

This is determined to exceed the error range, and it is determined to be No in step S803. In addition, if it is determined to be Yes in step S803, the comparison for similarity by gestalt pattern matching is performed in step S805. Since the similarity between the result of the conversion processing and the text before the conversion is less than a threshold of 0.18, it is determined to be No in step S805. As a result, it is not outputted to the user, and the instruction text is changed, and in step S809, the generative AI is instructed to perform conversion again. By this, it is possible to increase the likelihood of being able to discard a conversion processing result that does not meet expectations without outputting it to the user and output, to the user, a conversion processing result that is more in alignment with expectations.

In the present embodiment, it has been described that processing for cutting out a character block in the read data stored in the data memory 303 is executed in step S403. At that time, it may be determined whether the amount of data of the read data is greater than or equal to the threshold. Then, the processing of FIG. 4 may be controlled based on whether the amount of data is greater than or equal to the threshold. For example, if the amount of data is determined to be greater than or equal to the threshold, the processing of FIG. 4 is executed as described in the present embodiment. Meanwhile, if it is determined that the amount of data is not greater than or equal to the threshold, that is, less than the threshold, in steps S404 and S412 transmission control for transmitting an image file corresponding to the read data instead of a character string such as that in the seventh line of FIG. 6 may be executed.

In the present embodiment, the processing for confirming an erroneous character correction result of generative AI has been described. However, the operation of the present embodiment can be applied not only to erroneous character correction but also to respective processes of summarization, anonymization, and translation.

The summarization processing is performed to extract main points from a character string before conversion. When the processing of FIG. 8 is applied to the summarization processing, in step S404 instruction text such as "Please summarize the following text in 100 characters or less." followed by a 500-character character string before conversion is assumed as a query for input to the generative AI.

In this case, because a limit on the number of characters, which is 100 characters, is specified in the instruction text, in step S803 it is determined whether the number of characters in an output result of the generative AI falls within a range from 90 and 100 characters, for example. Then, the CPU 301, in step S804, extracts words from the output result of the generative AI, and in step S805, determines whether the extracted words are included in the character string before conversion. If extracted words are determined to be included, the processing of FIG. 8 is terminated, and extracted words are determined to not be included, the processing proceeds to step S806. The processing of the other steps is the same as in the processing described in the present embodiment. By this, it is possible to increase the likelihood of being able to discard a summarization processing result that does not meet expectations without outputting it to the user and output, to the user, a summarization processing result that is more in alignment with expectations.

The anonymization processing is performed to prevent output of personal information such as name and address. When the processing of FIG. 8 is applied to the anonymization processing, in step S404 instruction text such as "Please anonymize the following text." followed by a character string before conversion including personal information is assumed as a query for input to the generative AI.

In this case, a name included in the text before conversion is replaced by text such as Mr. A or the like by which an individual cannot be identified, and an address is replaced by a representation up to the prefecture name, for example. In the anonymization processing, it is assumed that the output result does not change greatly from the input result; therefore, by performing comparison of the numbers of characters in step S803 and comparison for similarity in step S805 as in the case of erroneous character correction in the present embodiment, it is determined whether a desired conversion processing result is obtained. If it is determined that the desired conversion processing result is obtained, the processing of FIG. 8 is terminated, and if it is determined that the desired conversion processing result is not obtained, the processing proceeds to step S806. By this, it is possible to increase the likelihood of being able to discard an anonymization processing result that does not meet expectations without outputting it to the user and output, to the user, an anonymization processing result that is more in alignment with expectations.

The translation processing is performed to replace a character string before conversion with that in a language different from that of the character string before conversion. When the processing of FIG. 8 is applied to the translation processing, in step S404 instruction text such as "Please translate the following text into English." followed by a character string before conversion created in Japanese is assumed as a query for input to the generative AI.

In the translation processing, while it is expected that the number of characters of a character string after conversion will change from the number of characters of a character string before conversion, it is expected that the number of words will not change greatly. Therefore, the processing of step S803 is not performed, and in step S804, the CPU 301 extracts the number of words, such as nouns, verbs, and subjects, from the character string after conversion. Then, in step S805, the number of words of the character string before conversion and the number of words of the character string after conversion are compared, and by determining whether or not a difference therebetween is within a predetermined range, it is determined whether or not a desired conversion processing result has been obtained. If it is determined that the desired conversion processing result is obtained, the processing of FIG. 8 is terminated, and if it is determined that the desired conversion processing result is not obtained, the processing proceeds to step S806. By this, it is possible to increase the likelihood of being able to discard a translation processing result that does not meet expectations without outputting it to the user and output, to the user, a translation processing result that is more in alignment with expectations.

Although the operation of the present embodiment has been described to be performed by the CPU 301, the above various kinds of control may be performed by one piece of hardware, or the control of the entire apparatus may be performed by a plurality of pieces of hardware (e.g., a plurality of processors and circuits) sharing processing.

In addition, although the present invention has been described in detail based on preferred embodiments thereof, the present invention is not limited to these specific embodiments, and various forms in a range that does not depart from the gist of the present invention are also included in the present invention. Further, each of the above embodiments merely describes one embodiment of the present invention, and it is also possible to appropriately combine each of the embodiments.

Further, in the above embodiments, description has been given using as an example a case where the present invention is applied to the printing apparatus 101, but the present invention is not limited to this example and is applicable to any electronic device capable of executing a character recognition function. That is, the present invention is applicable to a personal computer, a PDA, a mobile telephone terminal, a portable image viewer, a printer apparatus including a display, a digital photo frame, an electronic book reader, an OCR camera, and the like.

### Other Embodiments

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

### REFERENCE SIGNS LIST

101 Printing apparatus: 105 PC: 106 Generative AI server: 201, 301 CPU

This application claims the benefit of Japanese Patent Application No. 2024-008827, filed January 24, 2024, which is hereby incorporated by reference herein in its entirety.

## Claims

1. An electronic device **characterized by** comprising:
obtaining means for obtaining text in an image by performing character recognition processing;
transmitting means for transmitting the text obtained through the character recognition processing as processing target text, and a processing instruction requesting processing of the text, to processing means;
receiving means for receiving a processing result that is based on the processing instruction from the processing means; and
output means for outputting a document as a result of the character recognition performed on the image, using text contained in the processing result received by the receiving means.

2. The electronic device according to claim 1, **characterized in that** the obtaining means divides the image on which the character recognition processing is to be performed into a plurality of regions, and obtains text from each of the plurality of divided regions as processing target text.

3. The electronic device according to claim 2, **characterized in that**, for each of the plurality of regions, the transmitting means transmits the processing target text corresponding to the region and a processing instruction requesting processing of the text obtained from the corresponding one of the plurality of regions, to the processing means.

4. The electronic device according to any one of claims 1 to 3, **characterized by** further comprising:
arrangement means for arranging the processing result received by the receiving means according to a layout of the text obtained by the obtaining means in the image.

5. The electronic device according to claim 4, **characterized in that** the output means outputs the document based on the layout in which the processing result is arranged by the arrangement means.

6. The electronic device according to any one of claims 1 to 5, **characterized by** further comprising:
determination means for comparing the processing target text transmitted to the processing means with first text contained in the processing result received by the receiving means, and determining whether a predetermined condition is satisfied.

7. The electronic device according to claim 6, **characterized in that** the predetermined condition is a condition for determining whether the first text is a result of the processing according to the processing instruction being performed as expected.

8. The electronic device according to claim 6 or 7, **characterized in that**, if the determination means determines that the predetermined condition is satisfied, the output means outputs the first text as the document.

9. The electronic device according to any one of claims 6 to 8, **characterized by** further comprising:
control means for performing control such that, if the determination means determines that the predetermined condition is not satisfied, a processing result containing second text, which is different from the first text, is received from the processing means.

10. The electronic device according to claim 9, **characterized in that**,
if the determination means determines that the predetermined condition is not satisfied, the control means controls the transmitting means to re-transmit the processing target text and a second processing instruction obtained by changing the processing instruction, to the processing means, and
the second text is text contained in a processing result received as a result of the second processing instruction from the processing means.

11. The electronic device according to claim 10, **characterized by** further comprising:
re-determination means for comparing the processing target text with the second text contained in the processing result received from the processing means as a result of the second processing instruction, and re-determining whether the predetermined condition is satisfied,
the control means performing control to generate an error notification indicating failure of the processing according to the processing instruction if it is determined that the predetermined condition is not satisfied even after the retransmission and the re-determination are performed a predetermined number of times.

12. The electronic device according to any one of claims 1 to 11, **characterized in that** the processing means is provided in an external system, and the transmitting means is controlled to transmit the processing target text and the processing instruction to the external system so that the processing target text and the processing instruction are input to the processing means.

13. The electronic device according to any one of claims 1 to 12, **characterized in that** the processing means is a generative artificial intelligence (AI) system.

14. The electronic device according to any one of claims 1 to 13, **characterized by** further comprising:
scan control means for performing control to scan an original document,
the image being an image obtained by scanning the original document through control by the scan control means.

15. The electronic device according to any one of claims 1 to 14, **characterized by** further comprising:
transmission control means for controlling, based on a data amount of the image, whether to transmit the text obtained through the character recognition processing as processing target text to the processing means, or to transmit an image file corresponding to the image to the processing means.

16. The electronic device according to any one of claims 1 to 15, **characterized in that** the processing instruction is a query.

17. The electronic device according to claim 16, **characterized in that** the query includes text requesting correction of an erroneous character of text.

18. The electronic device according to claim 16 or 17, **characterized in that** the query includes text requesting summarization of text.

19. The electronic device according to any one of claims 16 to 18, **characterized in that** the query includes text requesting abstraction of a specific character string in text.

20. The electronic device according to any one of claims 16 to 19, **characterized in that** the query includes text requesting translation of text.

21. An electronic device control method performed in an electronic device, **characterized by** comprising:
an obtaining step of obtaining text in an image by performing character recognition processing;
a transmitting step of transmitting the text obtained through the character recognition processing as processing target text, and a processing instruction requesting processing of the text, to processing means;
a receiving step of receiving a processing result that is based on the processing instruction from the processing means; and
an outputting step of outputting a document as a result of the character recognition performed on the image, using text contained in the processing result received in the receiving step.

22. A program causing a computer to function as:
obtaining means for obtaining text in an image by performing character recognition processing;
transmitting means for transmitting the text obtained through the character recognition processing as processing target text, and a processing instruction requesting processing of the text, to processing means;
receiving means for receiving a processing result that is based on the processing instruction from the processing means; and
output means for outputting a document as a result of the character recognition performed on the image, using text contained in the processing result received by the receiving means.

23. A storage medium storing a program for causing a computer to function as:
obtaining means for obtaining text in an image by performing character recognition processing;
transmitting means for transmitting the text obtained through the character recognition processing as processing target text, and a processing instruction requesting processing of the text, to processing means;
receiving means for receiving a processing result that is based on the processing instruction from the processing means; and
output means for outputting a document as a result of the character recognition performed on the image, using text contained in the processing result received by the receiving means.
